# EUROPEAN PATENT APPLICATION

(11) **EP 4 621 531 A1**
(43) Date of publication of application: **24.09.2025**
(21) Application number: 24164234.7
(22) Date of filing: 18.03.2024
(51) Int. Cl.: G06F 3/01, G06F 3/048, G06F 9/451, G06F 30/27, G06F 40/00

(54) **DETERMINING SIMULATION INPUT DATA**

(71) Applicant: HQS Quantum Simulations GmbH, 76131 Karlsruhe (DE)
(72) Inventor: Covito, Fabio, 20255 Hamburg (DE); Silvi, Giorgio, 75334 Straubenhardt (DE)
(74) Representative: Durm Patentanwälte PartG mbB

(57) **Abstract**

The present invention relates to an apparatus (14) for determining simulation input data for simulating a physical phenomenon with a simulation software (12), comprising: a user interface (18) for receiving user input data from a user (20) relating to the physical phenomenon to be simulated; a computer interface (22) for extracting initialization data from a predefined definition file including information relating to the scope of the simulation software and information relating to an interaction data format of the simulation software, wherein said computer interface is configured to provide said initialization data and said user input data to a large language model processor (16), wherein said computer interface is configured to receive feedback data and/or simulation input data from the large language model processor; and a processing unit (24) for determining (a) whether the feedback data indicates that further user input data from the user is required and for con-trolling the user interface to correspondingly prompt the user and control-ling the computer interface to provide said further user input data to the large language model processor in this case, and (b) whether the simulation input data is valid based on the predefined definition file.

## Description

The present invention relates to an apparatus for determining simulation input data for simulating a physical phenomenon with a simulation software. The present invention further relates to a system for simulating a physical phenomenon as well as to a method and a computer program.

Simulation tools for scientific problems and other application areas (simulation software) make use of computer algorithms to solve complex problems in various disciplines. The input data structures (simulation input data) to such tools are usually intricate and, to be used efficiently, require training, technical knowledge or deep knowledge of the specific application involved. In the field of simulating physical phenomena such as atomic structures, mechanical relationships between entities in order to determine material properties or to solve engineering problems, magnetic properties and behaviors or quantum mechanical properties, oftentimes a deep understanding of the underlying physics is required to adequately put a simulation software to use.

Current approaches in this field usually rely on complex user interfaces (Uls) for data entry and extensive documentation for informing the user of the possible features offered by the tool and provide additional background knowledge needed for its proficient use. Uls are often difficult to develop and maintain and offer only limited functionalities as they can be complicated to navigate. Documentation represents a double effort: it requires the developer's time to be written and proofread, it must be maintained over time to stay consistent and up-to-date with the underlying software and, additionally, requires the users to invest time to read it.

Recently, more and more software development problems are tackled based on the use of so-called large language models (LLMs). LLMs make it possible to generate language and carry out natural language processing tasks such as classifications and others. LLMs acquired these abilities by learning statistical relationships from text documents during a computationally intensive training process. In particular, LLMs can thereby correspond to generative artificial intelligence approaches that can be used for text generation by taking an input text and generating an output text based thereupon. The technical bases for LLMs are usually artificial neural networks. In particular, the field of software development has profited from the introduction of LLMs and LLM-based tools since the generation of software code, software specifications etc. can be based on the output of an LLM.

One challenge in this context is that LLMs are usually trained based on large amounts of general data. This leads to a broad applicability but sometimes also to questionable outputs for very specific topics. This again results in the fact that scientists or engineers are facing problems that require very specific background knowledge regarding small details and the underlying physical phenomena have not yet been able to profit from the use of LLMs.

In view of this, it is an object of the present invention to facilitate and enable the use of simulation tools for simulating physical phenomena. In particular, it is an object of the present invention to make the process of determining simulation input data for simulating physical phenomena with a corresponding simulation software easier and more efficient.

In a first aspect, the present invention relates to an apparatus for determining simulation input data for simulating a physical phenomenon with a simulation software, comprising:
- a user interface for receiving user input data from a user relating to the physical phenomenon to be simulated;
- a computer interface for extracting initialization data from a predefined definition file including information relating to the scope of the simulation software and information relating to an interaction data format of the simulation software, wherein said computer interface is configured to provide said initialization data and said user input data to a large language model processor, wherein said computer interface is configured to receive feedback data and/or simulation input data from the large language model processor; and
- a processing unit for determining (a) whether the feedback data indicates that further user input data from the user is required and for controlling the user interface to correspondingly prompt the user and controlling the computer interface to provide said further user input data to the large language model processor in this case, and (b) whether the simulation input data is valid based on the predefined definition file.

In another aspect, the present invention relates to a system for simulating a physical phenomenon, comprising:
- an apparatus as described above; and
- a large language model processor for handling requests based on a pretrained large language model, wherein said large language model processor is preferably accessible via the internet and/or an application programming interface.

In yet another aspect, the present invention relates to a method for determining simulation input data for simulating a physical phenomenon with a scientific simulation software, comprising steps of:
- receiving user input data from a user relating to the physical phenomenon to be simulated via a user interface;
- extracting initialization data from a predefined definition file including information relating to the scope of the scientific simulation software and information relating to an interaction data format of the scientific simulation software,
- providing said initialization data and said user input data to a large language model processor via a computer interface;
- receiving feedback data and/or simulation input data from the large language model processor via the computer interface;
- determining (a) whether the feedback data indicates that further user input data from the user is required and correspondingly prompting the user via the user interface, and providing said further user input data to the large language model processor in this case via the computer interface; and
- determining (b) whether the simulation input data is valid based on the predefined definition file.

In yet a further aspect of the present invention, there is provided a computer program which comprises program code means for causing a computer to perform the steps of the method disclosed herein when said computer program is carried out on a computer as well as a non-transitory computer-readable recording medium that stores therein a computer program product, which, when executed by a processor, causes the method disclosed herein to be performed.

Preferred embodiments of the invention are defined in the dependent claims. It shall be understood that the claimed apparatus, method, system, computer program and medium have similar and/or identical preferred embodiments as the claimed apparatus and system, in particular as defined in the dependent claims and as disclosed herein.

The present invention is based on the idea of providing a user of a simulation software with artificial intelligence-based means for simulating a physical phenomenon in the simulation software. The user provides input relating to the physical phenomenon to be simulated. In particular, the user, based on his in-depth knowledge of the physical phenomenon, describes the aims and goals of the simulation to be performed. The user does not necessarily need to have an in-depth knowledge of the underlying simulation software. In addition to this user input, a predefined definition file relating to the simulation software itself is used. This predefined definition file can particularly be generated based on in-depth knowledge of the scope and specific requirements of the simulation software itself. Both the user input data and the predefined definition file are processed and provided to a large language model processor. This large language model processor makes use of a pretrained large language model to process a request relating to the generation of simulation input data for the simulation software based on the user input data and the predefined definition files. The feedback from the large language model processor and/or the simulation input data generated by the large language model processor is then further processed. In particular, it is determined whether additional user input is required and whether the generated simulation input data is valid. The user may thus interact with the large language model. If it is determined that the simulation input data is valid, it is possible that the simulation software is directly provided with the simulation input data in order to carry out the desired simulation of the physical phenomenon. Then again, the user is provided with the results of the simulation to allow for further iterations and/or refinement if needed.

In comparison to previous approaches for operating a simulation software for simulating a physical phenomenon, the approach of the present invention makes the interaction easier and more efficient. The approach of the present invention corresponds to a sort of middleware for operating a simulation software. In particular, the apparatus and method of the present invention can correspond to a software tool representing an assistant or a wrapper layer for making use of a large language model in the simulation of a physical phenomenon.

The user can define his input in an abstract way, for instance in natural language, abstracting from the underlying complex data structures. The user can focus on the underlying scientific or engineering problem that is tackled with the simulation instead of focusing on the specifics of the simulation software. Thus, the process of making use of simulation software is improved. The approach of the present invention thereby helps in on-boarding situations and in the daily usage of simulation tools. Overall efficiency and performance in the use of scientific or engineering computing workflows is improved.

In a preferred embodiment, the user interface is configured to receive the user input in the form of natural language. Additionally or alternatively, the user interface is configured to receive a part of a scientific paper or scientific publication as user input data. Interacting in the form of natural language makes it easy and efficient to provide the required data relating to the physical phenomenon to be simulated. An intuitive interaction is enabled. By providing the option of entering text or other parts (graphs, equations, etc.) of scientific publications/papers it becomes possible to directly use previous work as a basis for one's problems. By means of providing a scientific paper/publication, context information relating to the simulation software or simulated physical phenomenon can be fed into the LLM. An efficient and accurate simulation is made possible.

In another preferred embodiment, the computer interface is configured to provide said initialization data to the large language model processor over the Internet via an application programming interface of the large language model processor, preferably in the form of natural language data. In other words, the apparatus of the present invention may make it possible to interact with large language models that are available and accessible via the Internet. Different suppliers offer their large language models via the Internet and make them accessible via corresponding APIs. The present invention allows to make use of these publicly available standard tools and to tailor these standard tools for the specific requirements in the field of simulating physical phenomena. An efficient implementation becomes possible.

In a preferred embodiment, the processing unit is configured to provide the simulation input data to the simulation software when said simulation input data is determined to be valid. Further, the processing unit is configured to control the computer interface to provide information regarding the invalidity of the simulation input data to the large language model processor when the simulation input data are not determined to be valid. In particular, it is thus possible that an iteration is performed in the approach of the present invention. The large language model processor can be prompted again in order to refine the generated simulation input data. This process can be repeated and iterated until an acceptable version of the simulation input data that precisely reflects the desired simulation is reached.

In a preferred embodiment, the processing unit is configured to initiate the simulation of the physical phenomenon by providing the simulation input data to the simulation software. It is, in other words, possible that the apparatus of the present invention directly interacts with the simulation software. The apparatus directly controls the simulation software in order to perform the desired simulation and, if necessary, provide feedback to the user and/or to the large language model processor. An efficient and accurate simulation is made possible.

In a preferred embodiment, the computer interface is configured to provide a result of the simulation of the physical phenomenon to the large language model processor. Additionally or alternatively, the user interface is configured to provide the result of the simulation of the physical phenomenon to the user. A feedback loop is made possible. On the one hand, it is possible that the large language model is used to refine the simulation input data and the corresponding feedback data based on the result of the simulation. On the other hand, it is also possible to interact with the user in order to refine the simulation and finetune or improve the simulation based on the user's experience and in-depth knowledge of the physical phenomenon to be simulated.

In a preferred embodiment, the computer interface is configured to extract initialization data including at least one of a data structure definition of the simulation input data, applicable constraints in the definition of the simulation input data, and applicable validation steps for validating the simulation input data. The predefined definition file may include this information. This information may be predetermined based on the requirements and specifications of the simulation software itself and based on the desired scope and context of the simulation to be carried out. This predefined definition file may thus particularly be provided by a developer who understands the simulation software as well as the physical phenomenon underlying the simulation. This person having knowledge in both fields transports his knowledge to a user of the apparatus of the present invention via the predefined definition file so that the user does not necessarily have to be an expert in the use of the simulation software. Ease of use of the simulation software is improved.

In a preferred embodiment, the computer interface is configured to extract the initialization data from a predefined definition file in JSON format and/or based on pydantic. JSON (JavaScript Object Notation) is an open-standard file format and data interchange format that uses human-readable text to store and transmit data objects. Pydantic is a Python library for data parsing and validation using Python type hints. The use of JSON/pydantic thereby make it possible to efficiently interact with both the user and the large language model processor. An efficient processing is obtained.

In a preferred embodiment, the apparatus is configured to determine simulation input data for simulating a material property or behavior of a material. The user interface is configured to receive user input data relating to the atomic structure of the material. One particularly interesting application scenario of the approach of the present invention is the simulation of materials and their atomic structures. This simulation is often used in scientific contexts in order to determine behaviors of materials under certain conditions. Scientific research is often based on corresponding simulations. The use of simulation tools in the scientific context is facilitated.

In a preferred embodiment the system of the present invention comprises a simulation software for simulating a physical phenomenon based on simulation input data. In particular, the simulation software can be a scientific simulation software for simulating properties of materials and or an engineering simulation software for simulating mechanical interactions. The use of the approach of the present invention in physics and engineering provides for a more efficient workflow in these disciplines and, ultimately, an increased productivity.

In a preferred embodiment of the system of the present invention the processing unit is configured to provide the simulation input data to said simulation software and preferably receive a simulation result from said simulation software. In other words, there may be a feedback from the simulation software to the processing unit that can then reiterate the use of the large language model processor based thereupon or also enter into another feedback loop with the user.

Herein, simulation input data particularly relates to a text-based computer-readable file to be provided to a simulation software as an input to carry out a simulation based on parameters that are described in the simulation input data. Simulation input data as well as user input may particularly be provided in text form. A physical phenomenon particularly corresponds to any real-world interrelation between objects such as electrons, spins, atoms, molecules, or components of larger size. Reactions to forces, radiation, changes in conditions, magnetic influences/properties, quantum relations etc. can correspond to physical phenomena to be simulated. In particular, a physical phenomenon corresponds to effects caused by such objects when interacting with other objects or when put under certain conditions.

A predefined definition file particularly also corresponds to a text file. Examples for content of this predefined definition file could include expected input/output data formats (interaction data format), available methods of the simulation software (interaction data format), specific parameters of the simulation software and/or relations of software parameters or input data to physical properties. The predefined definition file could be provided by an expert user and could have the form of a structured text file (like JSON). Herein, initialization data can particularly refer to a structured information generated based the content of the predefined definition file.

The initialization data may particularly be tailored to the expected input/output data of the LLM. In other words, the initialization data can correspond to a refined and adapted version of the predefined definition file. In particular, the initialization data can comprise context information relating to the desired scope of the simulation and simulation software. The initialization data can comprise the input/output data structures the LLM is expected to provide/fill. The initialization data can include data describing an interface to the available tools. The initialization data may be provided in the form of a structured text file. An interaction with the large language model processor can particularly be carried out based on text, preferably natural language.

Simulation input data particularly correspond to the input for a call to a simulation software in order to perform a desired simulation. Simulation input data may particularly correspond to structured data in a format that the simulation software can process, for instance a structured text file.

These and other aspects of the invention will be apparent from and elucidated with reference to the embodiment(s) described hereinafter. In the following drawings
- Figure 1: shows a schematic illustration of a system according to the present invention;
- Figure 2: shows an example of a simulation input data code;
- Figure 3: shows a schematic illustration of the concept of the present invention in a preferred embodiment;
- Figure 4: shows a schematic illustration of a possible workflow in the approach of the present invention; and
- Figure 5: shows a schematic illustration of a method of the present invention.

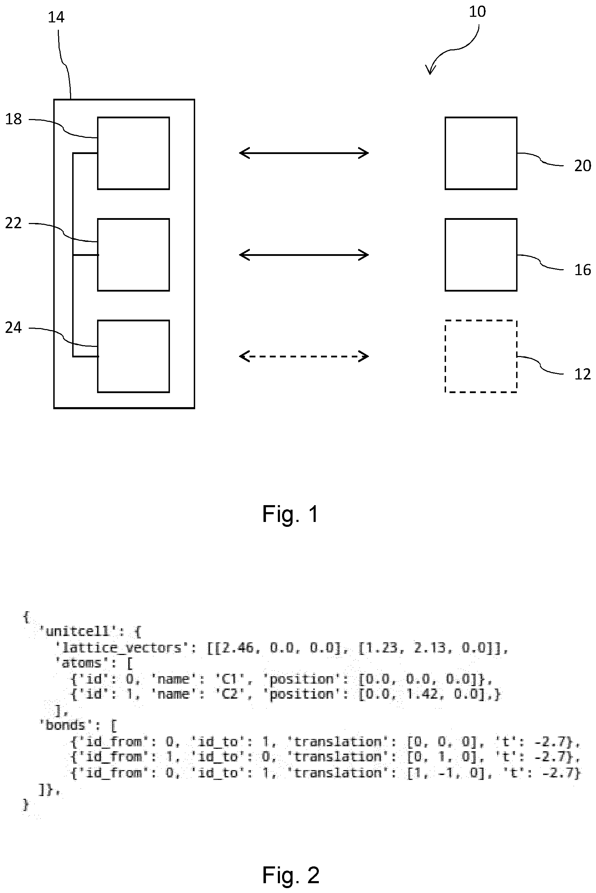

In Fig. 1, a system 10 for simulating a physical phenomenon according to the present invention is schematically illustrated. The system 10 includes an (optional) simulation software 12, an apparatus 14 for determining simulation input data and a large language model processor 16. The apparatus 14 includes a user interface 18 for interacting with a user 20, a computer interface 22, and a processing unit 24. The different interfaces and units can be implemented in the form of hard- and/or software and can also be combined with one another upon need.

It is the concept of the present invention to define an apparatus or software module that corresponds to a sort of virtual assistant. This virtual assistant tailors its identity given a certain (generic) simulation software. The virtual assistant, particularly through a chat-like interface, can analyze user input and extract relevant information, thereby aiding the user in the correct definition of an input needed to interact with the simulation software.

The apparatus 14 can particularly be implemented in the form of a computer or a software tool running on a computer. It is to be understood that the functionality of the apparatus 14 can be provided by a software. In other words, the apparatus 14 itself may particularly be implemented in the form of software. The apparatus 14 preferably corresponds to a sort of software interface to an LLM or a middleware for facilitating the use of an LLM in a specific context. The apparatus 14 may, in view of the above, also be referred to as modeling assistant.

The simulation software 12 can particularly be a scientific simulation tool for simulating materials and their behavior under certain circumstances. The simulation software 12 can also be an engineering simulation tool for simulating mechanical interaction of different components and their behavior under changing or varying external conditions.

The user interface 18 allows interaction with the user 20. For this, the user interface 18 may particularly correspond to a software interface that allows the user 20 to provide input. Preferably, the user 20 can provide the input in the form of text, in particular natural language. It may also be possible that the user 20 provides input in the form of text or graphical illustrations, e. g. a graphical illustration from a scientific paper etc.

The computer interface 22 interacts with the large language model processor 16. In particular, this interaction can be performed via an internet connection. In particular, a large language model processor 16 that provides an application programming interface via the Internet can be used in the system of the present invention. The computer interface 22 thus particularly corresponds to an interface for interacting with another computer. In particular, an interface to an internet connection may be included in the computer interface 22. The computer interface 22 allows processing a predefined definition file that may be already present or that may be received from another entity, e. g. via the Internet. From this predefined definition file, the computer interface 22 extracts initialization data. In particular, the computer interface 22 may extract a data structure corresponding to the simulation input data, applicable constraints, or applicable validation steps for validating the simulation input data. This predefined definition file may particularly be provided in the form of a JSON file.

The large language model processor 16 may particularly correspond to a service of software offering an interface for prompting and receiving feedback. The computer interface 22 is configured to communicate with this large language model processor 16 and provide the large language model processor 16 with the user input data as well as the initialization data. Based on this, the large language model processor 16 determines feedback data and/or simulation input data that is then provided to the computer interface 22. In particular, the large language model processor 16 may be accessible via the Internet and/or a corresponding API.

The processing unit 24 determines based on the feedback data and the simulation input data, whether further user input is necessary and/or whether the simulation input data is valid and serves its purpose. For this, the processing unit 24 can validate the simulation input data by further evaluating information from the predefined definition file. In addition, it is possible that the processing unit 24 directly interacts with the simulation software 12. The processing unit 24 may thus directly communicate with and control the simulation software 12. The simulation result provided by the simulation software 12 can then be fed back to the user and, upon need, also be reiterated with the user and/or the large language model processor 16.

The approach of the present invention thereby leverages large language models to extract the relevant input data from the user's prompts (preferably natural language prompts) and format it in a standardized way, compatible with the simulation software it is based upon. This is achieved through the definition of the relevant data structures in a standardized form (predefined definition file). Particularly, well-known Python packages (Pydantic) or well-known JSON schemas can be used in this respect. The apparatus of the present invention can automatically process these data making them directly compatible with the LLM and thereby specifying the identity of the virtual assistant for the desired simulation. In particular, the apparatus of the present invention may extract from the predefined definition file (as, e.g., provided by an expert user) the relevant data (in the applicable format) for being provided to the LLM (initialization data), The virtual assistant checks and/or proves the relations and conditions for the validity of the data according to the definitions in the definition file. The conversational nature of this assistant thereby finally provides an environment for a user to discuss the underlying science or engineering definitions of the problem in question, further supporting the user in the data-defining process. Optionally, it is possible to give additional domain knowledge to the apparatus of the present invention, thereby improving its accuracy and its support role.

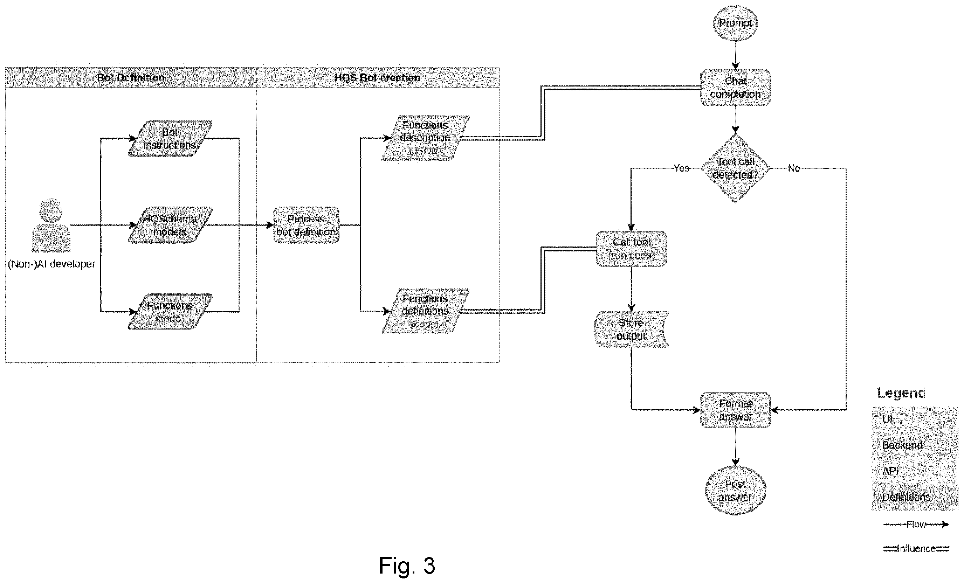

In this context, Fig. 3 schematically illustrates the details of the approach of the present invention. In the following, an example is outlined for utilizing the concept of the present invention in the field of scientific simulation. A scientific simulation software gives definitions of a material according to its own specific format and can, based thereupon, calculate a certain property (e. g. the ground state energy) of it. In the following, the apparatus of the present invention is implemented in the form of a software providing a chat-like interface for the user being. The apparatus is referred to as modeling assistant.

In the top right of the diagram in Fig. 3, the user initiates the process by prompting the modeling assistant (preferably in natural language) to initialize a certain material in the simulation software. For instance, graphene may be used as an example. The -chat completion- step invokes an LLM, which detects that the user wants to initialize graphene. The LLM is aware of the specific format that the simulation software requires for the simulation input data to initialize a material (through the initialization data) and generates the input associated with graphene. The specific definitions in the simulation input data can particularly be provided in the form of text, wherein different parameters are indicated for different aspects of the desired simulation. In the -call tool- step, the modeling assistant, having access to the input structures and the LLM's response, can verify the integrity and correctness of the corresponding general input (validation step). In this respect, Fig. 2 shows an example of what this could look like.

This result is then stored and rendered in text form for presentation to the user. At this point, the user is aware of the automation step that took place and can (for instance again via natural language) ask the modeling assistant to change one specific parameter of the material. Getting back to the top of the diagram in Fig. 3, the LLM can now, again, detect the need to call the appropriate tool to modify the input. This tool can be called by the modeling assistant and the deducted input can again be presented to the user. For instance, the user could be satisfied with the input defined so far and therefore ask the modeling assistant to use this input to compute, through the use of the simulation software, the ground state energy. Running again through the illustrated loop processing of the modeling assistant, the LLM detects a call for computing the ground state energy by using the simulation software and, for this, collects the input associated with this -tool call-. This call is carried out by the backend and the result is finally collected, formatted, and presented to the user. This loop can continue as long as required.

Advantages of the approach of the present invention particularly include an improved efficiency and performance in the usage of scientific and engineering computing workflows when simulating physical phenomena. The user experience can be enhanced. An assistant of adaptive nature can be provided to accommodate different underlying simulation software approaches. An easy-to-use user interface can be provided. The probability of wrong or imprecise input can be reduced. A time for new users to get started with a simulation software can be reduced.

In summary, the method, apparatus and system of the present invention described herein offer a novel approach to improving the efficiency of the usage of simulation software, in particular in the fields of scientific simulations and engineering simulations. The unique combination of natural language generation and highly technical scientific software brings forward a new approach to solving the problem of user input and interaction with complex software requiring high levels of training and prior knowledge.

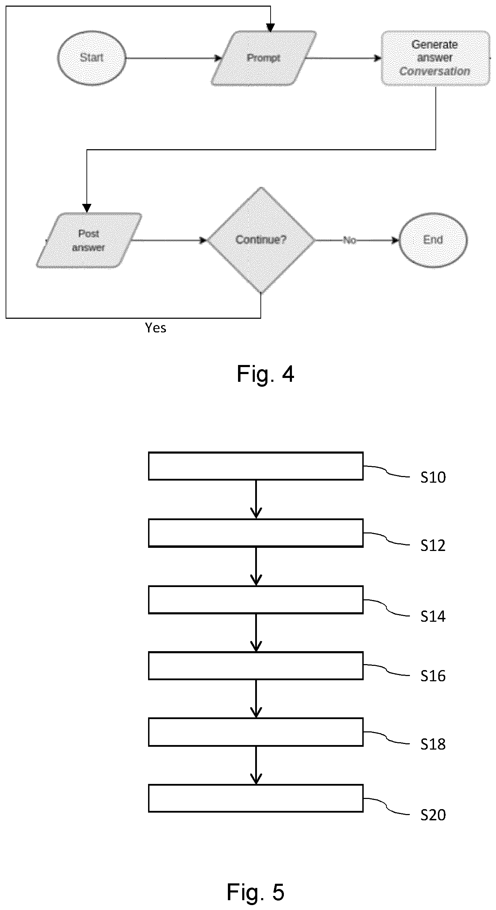

In this respect, Fig. 4 schematically illustrates a reduced flow of how an interaction with the apparatus, method, and system of the present invention can be put to use. In particular, the illustration in Fig. 4 shows that a loop processing with multiple iterations can be used in order to refine the output.

Fig. 5 schematically illustrates a method of the present invention in a preferred embodiment. In particular, the method includes steps of receiving S10 user input, extracting S12 initialization data, providing S14 said initialization data and said user input data to a large language model processor, receiving S16 feedback data and/or simulation input data, determining S18 whether the feedback data indicates that further user input data is required, and determining S20 whether the simulation input data is valid. This method can particularly be implemented in the form of a software running on a personal computer and having an internet connection.

In the following, two examples of how the apparatus, method, and system of the present invention can be put to use are described. The apparatus of the present invention is once again referred to as modeling assistant. To set up a specific instance of the modeling assistant, a developer must provide the specific data structures (model definitions) the modeling assistant must be aware of. Additionally, operations on these structures can be defined, too.

The first example relates to simulations of quantum materials: In condensed matter physics a material can be described by the atoms composing it: one can define, for example, a certain building block, called the unit cell, which contains a certain set of atoms. This is then repeated a certain number of times in different directions called the lattice vectors, to define the structure of the material. Each atom in the unit cell has different properties, such as: position, atomic species, and so on. Moreover, different software packages might use different names to address different properties of a material, further complicating communication and/or adaption to different codes. Additionally, if one wants to analyze a certain material, one might want to calculate some additional properties, starting from its definition.

The first example particularly relates to a band structure. More advanced examples might be the conductivity, heat capacity, or optical properties like absorption or response to external fields (electromagnetic radiation). The band structure calculation, although of simple nature compared to the more advanced examples, is fundamental in studying materials and requires different parameters to be computed, which can strongly affect the interpretation of results. One example is the so-called k-path: this specifies the domain in which the band structure has to be calculated - to be able to compare results with the literature, or to make statements about the material behavior, one must understand and use the correct k-path.

Even without going further into detail, it can be observed how, even at the simplest level, the problem is quite complex and requires specific technical knowledge to be handled. By providing the details of the data structures associated with a certain quantum material software and some of its functionalities (e. g. the band structure calculation) once and only once to the Modeling Assistant (modeling assistant), it can lift the burden of technicalities from the user.

The user will then be able to simply ask the modeling assistant to define a certain material in natural language: "initialize the unit cell of graphene" or with a visual input: e.g. a page of a paper where a material is depicted in a picture and the additional prompt "initialize a material as depicted in figure xx of this paper". At this point the modeling assistant will fill in, to the best of its knowledge given by the context, a material adhering to the interface (model definitions) provided, i. e. all the properties we mentioned above with the names we provided (which are by definition compatible with the underlying scientific software).

This intermediate result is presented to the user. The modeling assistant, knowing the specific definitions and constraints of the data structure, can additionally run validation procedures on the data. For example, a material cannot have two atoms in the same exact position - this is simply not allowed by physics; though, a user might enter invalid coordinates for atoms and finally obtain inconsistent results. In case these inconsistencies are detected, depending on its configuration, the modeling assistant will either try to fix these on its own and repeat the validation steps (always notifying the user about the progress) or present the problem to the user, offer a solution, and asks for additional instructions. In this case, it would send a message to the user: "Two atoms cannot have the same coordinates, as this is not possible in nature. Please provide the adjusted coordinates for the atoms in question".

Once the material definition has been validated, this will be presented to the user, who will be able to potentially modify some entries to their liking. Moreover, the user will be able to ask the modeling assistant to calculate the band structure of the material. Performing a simulation is possible for the modeling assistant once a simulation tool can be called via an external API, e.g., via WEB API (REST) or executing the program on the hard disk with an input file. The input and calling of the simulation tool can be added to the modeling assistant as a model definition. An example for this is the simulation of a Graphene band structure.

At this point, this computation is guaranteed to successfully run as the material is correctly defined according to its true interface with the underlying software. The user though, might be unsure about the k-path to use for the calculation. Again, it could ask the modeling assistant what options are available or provide their own k-path, again from natural language or from an image taken from a paper. The simulation at this point is set up and the modeling assistant can run the calculation. Once the calculation is completed, the modeling assistant can present its result to the user. In this case the results would be an interactive plot of the band structure of the defined material. This cycle can obviously be repeated ad infinitum.

The second example relates to the employment of the modeling assistant for a mechanical engineering application: an engineer has to design a new chip holder for a computing device. In this case the choice of the material for the holder (apart from the design itself) is crucial for its thermomechanical properties. In this particular example emphasis is onto the heat transport of the holder onto the cooling unit as it strongly impacts the performances of the computing device.

In this case the modeling assistant would have at its disposal the particular design (or a list of possible designs) of the holder, as well as a database of all possible materials with which to construct the holder. This DB can be unstructured or contain data from different sources with different conventions etc. Finally, the modeling assistant has access to a software which, given a holder design and the material it is made of, can compute all heat transport properties needed for the problem at hand. This means in particular that the modeling assistant has been provided with the definitions of the corresponding models for the software input.

The material DB would contain all properties needed by this code to correctly analyze the thermal properties of the holder. At this point the interaction of a user with the modeling assistant is carried, again, by simple natural language. Alternatively, the user provides possible data sources for the materials together with their question / request. The user could ask the modeling assistant to search for a certain material or material with a specific property, e.g., heat transfer coefficient or thermal resistivity. The modeling assistant can then fetch the corresponding information from the database and display them to the user. This display feature can also be customized to have an interactive nature providing additional insight to the user all at a glance. At this point the user could specify the design of the holder.

The modeling assistant can now carry out a few simulations (or prepare the input for these simulations) on the defined holder: this could result in a preliminary analysis containing general information about the holder ranging from estimated costs to general mechanical properties like stress-strain behavior, depending on the simulation tool used.

These quantities could be further validated given some general feasibility rules: e.g. costs inferior to a threshold or mechanical properties up to standards. Once the validation step is completed, the results of the preliminary analysis can be presented to the user. These outputs of a first most likely cheap (on terms of used resources or money) simulation define the input for more elaborate simulations.

At this point, the user can ask the modeling assistant to perform the heat transport simulations (prepare the input based on the initially defined models) given all the input defined so far. The output, again, can be visualized interactively, e.g. with a 3D heatmap representing the heat transfer coefficient of the device in its different areas.

Performing a simulation is possible for the modeling assistant once a simulation tool can be called via an external API, e.g., via WEB API (REST) or executing the program on the hard disk with an input file.

Using the modeling assistant for mechanical engineering simulation is particularly interesting for complex simulations where for example different physical effects that interact with each other have to be simulated simultaneously, for example the flow of a cooling liquid, the spreading of heat through a device such as the chip holder described above and the thermal extension of the entire device. This requires input from different specializations of physics or mechanical engineering and a tool like the modeling assistant would greatly improve the usability for individual users of such a simulation tool, e. g., a mechanical engineer instead of a group of physicists or specialists.

Thus, the foregoing discussion discloses and describes merely exemplary embodiments of the present disclosure. As will be understood by those skilled in the art, the present disclosure may be embodied in other specific forms without departing from the spirit or essential characteristics thereof. Accordingly, the description is intended to be illustrative, but not limiting the scope of the disclosure, as well as other claims. The disclosure, including any readily discernible variants of the teachings herein, defines, in part, the scope of the foregoing claim terminology such that no inventive subject matter is dedicated to the public.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure. Further, such software may also be distributed in other forms, such as via the Internet or other wired or wireless telecommunication systems. A method according to the present invention may particularly be carried out to control the operation of a software defined radio.

The elements of the disclosed devices, circuitry and system may be implemented by corresponding hardware and/or software elements, for instance appropriated circuits. A circuit is a structural assemblage of electronic components including conventional circuit elements, integrated circuits including application specific integrated circuits, standard integrated circuits, application specific standard products, and field programmable gate arrays. Further a circuit includes central processing units, graphics processing units, and microprocessors which are programmed or configured according to software code. A circuit does not include pure software, although a circuit includes the above-described hardware executing software.

## Claims

1. Apparatus (14) for determining simulation input data for simulating a physical phenomenon with a simulation software (12), comprising:
a user interface (18) for receiving user input data from a user (20) relating to the physical phenomenon to be simulated;
a computer interface (22) for extracting initialization data from a predefined definition file including information relating to the scope of the simulation software and information relating to an interaction data format of the simulation software, wherein said computer interface is configured to provide said initialization data and said user input data to a large language model processor (16), wherein said computer interface is configured to receive feedback data and/or simulation input data from the large language model processor; and
a processing unit (24) for determining (a) whether the feedback data indicates that further user input data from the user is required and for controlling the user interface to correspondingly prompt the user and controlling the computer interface to provide said further user input data to the large language model processor in this case, and (b) whether the simulation input data is valid based on the predefined definition file.

2. Apparatus (14) according as claimed in claim 1, wherein the user interface (18) is configured to
receive the user input in the form of natural language; and/or
receive a part of a scientific paper or scientific publication as user input data.

3. Apparatus (14) according to any one of the preceding claims, wherein the computer interface (22) is configured to provide said initialization data to the large language model processor (16) over the internet via an application programming interface of the large language model processor, preferably in the form of natural language data.

4. Apparatus (14) according to any one of the preceding claims, wherein the processing unit (24) is configured to
provide the simulation input data to the simulation software (12) when said simulation input data is determined to be valid; and
control the computer interface (22) to provide information regarding the invalidity of the simulation input data to the large language model processor (16), when the simulation input data is not determined to be valid.

5. Apparatus (14) according to any one of the preceding claims, wherein the processing unit (24) is configured to initiate the simulation of the physical phenomenon by providing the simulation input data to the simulation software (12).

6. Apparatus (14) according to the preceding claim, wherein
the computer interface (22) is configured to provide a result of the simulation of the physical phenomenon to the large language model processor (16); and/or
the user interface (18) is configured to provide the result of the simulation of the physical phenomenon to the user.

7. Apparatus (14) according to any one of the preceding claims, wherein the computer interface (22) is configured to extract initialization data including at least one of a data structure definition of the simulation input data, applicable constraints in the definition of the simulation input data and applicable validation steps for validating the simulation input data.

8. Apparatus (14) according to any one of the preceding claims, wherein the computer interface (22) is configured to extract the initialization data from a predefined definition file in JSON format and/or based on pydantic.

9. Apparatus (14) according to any one of the preceding claims, wherein
the apparatus is configured to determine simulation input data for simulating a material property or behavior of a material; and
the user interface (18) is configured to receive user input data relating to the atomic structure of the material.

10. System (10) for simulating a physical phenomenon, comprising:
an apparatus (14) as defined in any of the preceding claims; and
a large language model processor (16) for handling requests based on a pretrained large language model, wherein said large language model processor is preferably accessible via the internet and/or an application programming interface.

11. System (10) as claimed in the preceding claim, comprising a simulation software (12) for simulating a physical phenomenon based on simulation input data, in particular a scientific simulation software for simulating properties of materials and or an engineering simulation software for simulating mechanical interactions.

12. System (10) as claimed in the preceding claim, wherein the processing unit is configured to provide the simulation input data to said simulation software (12) and preferably receive a simulation result from said simulation software.

13. Method for determining simulation input data for simulating a physical phenomenon with a scientific simulation software (12), comprising steps of:
receiving (S10) user input data from a user relating to the physical phenomenon to be simulated via a user interface (18);
extracting (S12) initialization data from a predefined definition file including information relating to the scope of the scientific simulation software and information relating to an interaction data format of the scientific simulation software, and
providing (S14) said initialization data and said user input data to a large language model processor (16) via a computer interface (22);
receiving (S16) feedback data and/or simulation input data from the large language model processor via the computer interface;
determining (a) (S18) whether the feedback data indicates that further user input data from the user is required and correspondingly prompting the user via the user interface, and providing said further user input data to the large language model processor in this case via the computer interface; and
determining (b) (S20) whether the simulation input data is valid based on the predefined definition file.

14. A computer program comprising instructions which, when the program is executed by a computer, cause the computer to carry out the method of the preceding claim.
